# EUROPEAN PATENT APPLICATION

(11) **EP 1 282 334 A2**
(43) Date of publication of application: **05.02.2003**
(21) Application number: 02011778.4
(22) Date of filing: 27.05.2002
(51) Int. Cl.: H04R 1/02, B60R 11/02

(54) **Bracket for mounting and speaker**

(30) Priority: 26.07.2001 JP 2001226764
(71) Applicant: Takehiro Co., Ltd., Anjou-shi, Aichi 444-1296 (JP); Nagase & Co., Ltd., Osaka-shi, Osaka 550-8668 (JP)
(72) Inventor: Iinuma, Satoshi, Anjou-shi, Aichi 444-1296 (JP); Suzuki, Kazuya, Anjou-shi, Aichi 444-1296 (JP); Tanaka, Kenichi, c/o Nagase & Co., Ltd., Nagoya-shi, Aichi 460-8560 (JP)
(74) Representative: Leson, Thomas Johannes Alois, Dipl.-Ing.

(57) **Abstract**

The present invention provides a bracket for mounting a speaker that allows a speaker to be easily mounted and removed without impairing the acoustic characteristics of the speaker used for a specific use such as car audio equipment, and that can reduce the possibility of the speaker being damaged during mounting or removal. The bracket of the present invention includes a base plate; and a plurality of hooks that are provided on one face of the base plate and can engage with a part of an edge of a speaker frame.

## Description

### BACKGROUND OF THE INVENTION

### 1. Field of the Invention

The present invention relates to a bracket for mounting a speaker. In particular, the present invention relates to a bracket for mounting a speaker that allows a speaker to be mounted and removed easily without damaging the speaker itself.

### 2. Description of the Related Art

Conventionally, audio equipment has been under in-depth development in order to improve sound quality. The acoustic characteristics of a speaker are among the characteristics of audio equipment that are required to be better.

For example, in the field of home audio equipment, an enclosure usually provided together with a baffle plate has been improved for better acoustic characteristics of a speaker. The enclosure is used to prevent the deterioration of the acoustic characteristics due to the interference of sound from the front and back of a speaker by enclosing the sounds radiated from the back of the speaker.

On the other hand, in the field of car audio equipment, it is comparatively difficult to achieve acoustic characteristics equal to those of home audio equipment by using an enclosure, in view of the size of the car and the trend towards a smaller weight of a car. As an alternative, a rear speaker used in car audio equipment is constituted such that the trunk room serves as the enclosure by penetrating the back face of the rear speaker into the trunk room. However, since the volume of space in the trunk room varies with the amount of loads accommodated in the trunk room, it is not possible to make the acoustic characteristics of the rear speaker constant.

In speakers used in car audio equipment, higher durability is required than that required for home audio equipment. For example, in summer, the temperature in inside of a car under sunshine may increase up to the vicinity of 90°C, whereas in winter, the temperature may decrease to below zero. In addition, if a speaker is provided in a door trim, the shoes of a passenger, which may be wet because of rain or the like, may touch the speaker. In order to prevent operation failure and/or sound quality deterioration of the speaker from such conditions, speakers for car audio equipment should have excellent durability such as heat resistance, moisture resistance, and water-repelling properties.

Furthermore, in recent years, cars are becoming lighter and accessories are becoming more compact to ensure more space of interior, and with these trends, there is a demand for improvement in the performance of speakers. For example, it is important to set the sound pressure characteristics for each channel of the speakers provided in the front, the center and the rear independently in order to reduce the difference in the acoustic characteristics, which depend on the position where the passengers are seated.

From this viewpoint, in the field of car audio equipment, speakers that are totally different from those for home audio equipment have been developed separately. As a result, car audio speakers that satisfy these requirements have excellent durability, but are inevitably rather expensive.

In a car audio speaker system, 2 to 10 speakers, such as a tweeter and a woofer, depending on the acoustic characteristics, are provided on specific interior components such as the door trim, the instrumental panel, and the rear tray of a car. Each speaker provided in these places is fixed, usually with screws or an adhesive. However, if the speakers are fixed in this manner, mounting and removal are cumbersome, the work efficiency is low, or the speaker itself may be damaged, when repairing or exchanging the interior components after an accident. Also when recycling the components of a wasted car, removal takes much time, which cannot provide sufficient satisfaction.

### SUMMARY OF THE INVENTION

The present invention provides a bracket for mounting a speaker that allows a speaker used for a specific use such as car audio equipment to be easily mounted and removed without impairing the acoustic characteristics of the speaker, and that can reduce the possibility of the speaker being damaged during mounting or removal.

A bracket of the present invention includes a base plate; and a plurality of hooks that are provided on one face of the base plate and can engage with a part of an edge of a speaker frame from the front of the speaker.

In one embodiment of the present invention, at least one of the hooks comprises a release flip at its top.

In one embodiment of the present invention, the plurality of hooks are provided on the base plate at equal intervals.

In one embodiment of the present invention, the base plate further comprises a hole for fixing.

In one embodiment of the present invention, the speaker is selected from the group consisting of a cone-shaped speaker, a flat panel shaped loudspeaker system and a transducer speaker.

In one embodiment of the present invention, the cone-shaped speaker is selected from the group consisting of a curved cone-shaped speaker, a flat cone-shaped speaker, a double cone-shaped speaker, an opry cone-shaped speaker and a parabolic cone-shaped speaker.

In one embodiment of the present invention, the flat panel shaped loudspeaker system is selected from the group consisting of a Brat Harrah shaped speaker, a Gamuzon shaped speaker and a single Gamuzon shaped speaker.

The present invention also provides a method for mounting a speaker on a mounting member, which comprises:
fixing a bracket, which has a base plate and a plurality of hooks, on the mounting member so that the base plate can contact with the mounting member; and
sandwiching a part of an edge of a speaker frame between the plurality of hooks and the base plate.

In one embodiment of the method of the present invention, at least one of the hooks comprises a release flip at its top.

In one embodiment of the method of the present invention, the plurality of hooks are provided on the base plate at equal intervals.

In one embodiment of the method of the present invention, the base plate further comprises a hole for fixing.

In one embodiment of the method of the present invention, the speaker is selected from the group consisting of a cone-shaped speaker, a flat panel shaped loudspeaker system and a transducer speaker.

In one embodiment of the method of the present invention, the cone-shaped speaker is selected from the group consisting of a curved cone-shaped speaker, a flat cone-shaped speaker, a double cone-shaped speaker, an opry cone-shaped speaker and a parabolic cone-shaped speaker.

In one embodiment of the method of the present invention, the flat panel shaped loudspeaker system is selected from the group consisting of a Brat Harrah shaped speaker, a Gamuzon shaped speaker and a single Gamuzon shaped speaker.

Using the bracket of the present invention, a speaker can easily be mounted on a member such as a door trim. The speaker mounted on the bracket of the present invention is fixed simply by engaging with the projections of the hooks of the bracket of the present invention. Therefore, the speaker can be mounted or removed in a short time in repair or exchange, and damaging the speaker itself can be avoided. Furthermore, since the speaker can be removed in a very simple manner, the components can be recycled very easily.

These and other advantages of the present invention will become apparent to those skilled in the art upon reading and understanding the following detailed description with reference to the accompanying figures.

### BRIEF DESCRIPTION OF THE DRAWINGS

Fig. 1 is a perspective view of a bracket illustrating an example of the bracket of the present invention;
Fig. 2 is a perspective view of a bracket illustrating another example of the bracket of the present invention;
Fig. 3 is a perspective view of a bracket illustrating another example of the bracket of the present invention, when mounting a cone-shaped speaker or a flat panel shaped loudspeaker system in the predetermined member;
Fig. 4 is a perspective view of a bracket illustrating another example of the bracket of the present invention, when mounting a transducer speaker in the predetermined member;
Fig. 5 is a schematic view of a front door of a car in which a speaker is fixed by using the bracket of the present invention;
Fig. 6 (a) is a schematic cross-sectional view taken along line A-A of Fig. 5 illustrating the bracket of the present invention that is provided in a door trim of a car and on which a speaker is mounted, in the case where a cone-shaped speaker is mounted; and
Fig. 6 (b) is a schematic cross-sectional view taken along line A-A of Fig. 5 illustrating the bracket of the present invention that is provided in a door trim of a car and on which a speaker is mounted, in the case where a transducer speaker is mounted.

### DESCRIPTION OF THE PREFERRED EMBODIMENT

Hereinafter, the present invention will be described with reference to the accompanying drawings.

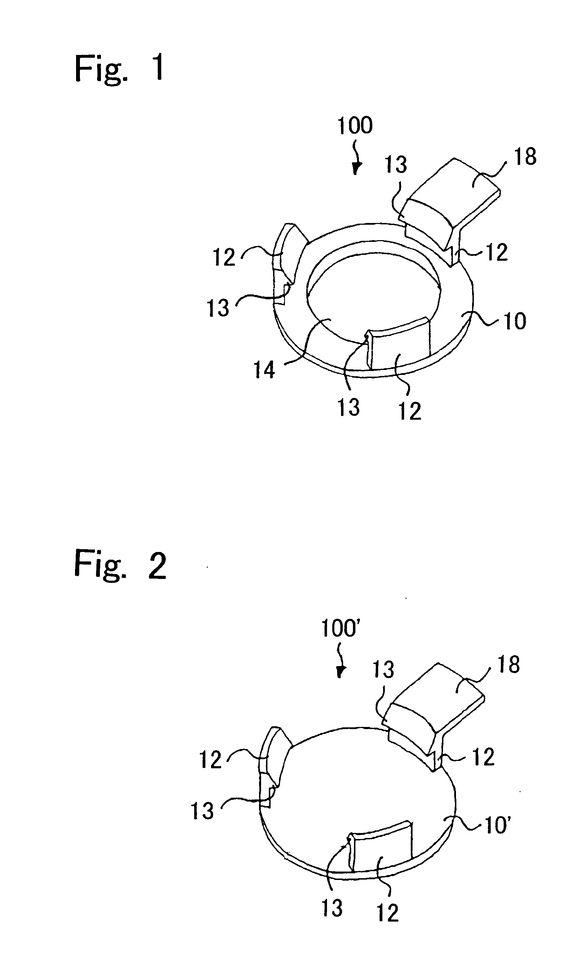

Fig. 1 is a perspective view of a bracket illustrating an example of the bracket of the present invention.

A bracket 100 of the present invention includes a base plate 10; and a plurality of hooks 12 that are provided on one face of the base plate 10 and can engage with a part of an edge of a speaker frame from the front of the speaker. The base plate 10 is a flat plate and generally is designed to be larger than the shape of the speaker frame to be accommodated.

The hooks 12 are provided in the same direction and perpendicularly to the base plate 10, and include a projection 13 for engaging with the edge of the speaker frame at their tops. All the projections 13 are directed inward. There is no particular limitation on the number of the hooks 12 provided on the base plate 10, but it is preferable to provide 3 to 6 hooks in view of the stability of the fixed speaker. It is further preferable to provide the hooks 12 at equal intervals.

In the bracket 100 of the present invention, it is preferable that at least one of the plurality of hooks 12 provided on the base plate 10 is provided with a release flip 18 at its top that is positioned opposite to the face in contact with the base plate 10. The release flip 18 preferably is directed to the opposite direction to the projection 13, that is, in an outer direction of the base plate 10. To mount a speaker, the release flip 18 is pressed so that the projection 13 of the hook 12 provided with that release flip 18 is opened outward, and the speaker is placed on the base plate 10. When the pressing is stopped, the hook 12 provided with the release flip 18 is returned to the original position by its elasticity, so that the projection 13 of the hook 12 is engaged with the edge of the speaker frame. On the other hand, to remove the speaker, the release flip 18 is pressed again to release the projection 13 from the edge of the speaker frame, so that the speaker can be removed from the bracket easily.

The bracket of the present invention can be used for any speakers having a protruding portion (edge) that allows a part of the outer circumference to be engaged with the hook. Examples of speakers that can be mounted by using the bracket of the present invention include cone-shaped speakers and flat panel shaped loudspeaker systems, and transducer speakers used by being attached to a distribution mode sound radiator panel as disclosed in WO 97/09859 which is hereby incorporated by reference. Specific examples of cone-shaped speakers include speakers having curved cone-shapes, flat cone-shapes, double cone-shapes, opry cone-shapes (oblique cone-shapes) and parabolic cone-shapes. Specific examples of flat panel shaped loudspeaker systems include Brat Harrah shaped, Gamuzon shaped, and single Gamuzon shaped speakers.

Among the above-described speakers, when mounting a cone-shaped speaker or a flat panel shaped loudspeaker system, the base plate 10 used in the present invention can be provided with an opening 14 so that the sounds radiated from the speaker are not blocked, as shown in Fig. 1. The opening 14 can have any one of the following shapes: a single hole opened along the size of a diaphragm of the speaker; a mesh; a multi-hole shape having multiple holes that are regularly arranged; an annular shape having a plurality of concentric slits having different radius; and a radial shape having a plurality of concentric slits extending in the radial direction. Alternatively, among the above-described speakers, when mounting a transducer speaker, the bracket 100' as shown in Fig.2 may be used, that is, the base plate 10' basically may be used in the form of a flat plate without an opening. When a flat plate without an opening is used, vibrations transmitted from a transducer are propagated to the base plate 10' without any change, and the base plate 10' can serve as a vibration board. Alternatively, the bracket of the present invention for the cone-shaped or flat panel shaped loudspeaker system provided with the opening 14, as shown in Fig.1, can be used for a transducer speaker. In this case, if the opening 14 is additionally provided with a hard plate (formed of synthetic resins such as polypropylene, ABS, or polyethylene terephthalate; metals such as stainless steel or aluminum; or woods such as laminated woods) that serves as a vibration board, vibration characteristics equal to or better than those of a flat base plate can be obtained.

The brackets 100 and 100' of the present invention shown in Figs. 1 and 2 may be fixed to a member that requires a short time mounting or removal (e.g., a door trim, an instrumental panel, and a rear tray of a car) by providing any suitable adhesion means such as adhesive or a couple-face tape to the bottom face (face opposite to the face in which the hook is provided) of the base plate.

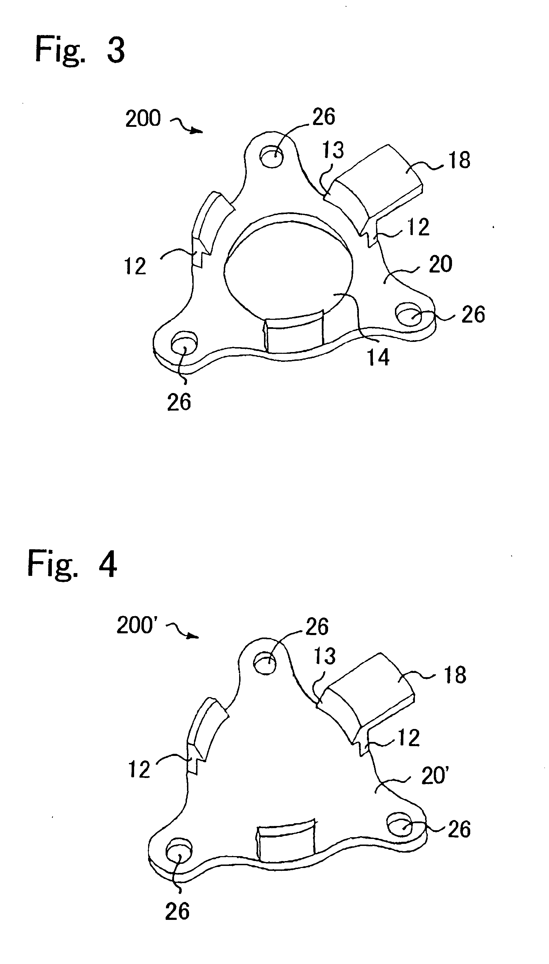

Fig. 3 is a perspective view of a bracket illustrating another example of the bracket of the present invention, when mounting a cone-shaped speaker or a flat panel shaped loudspeaker system on the predetermined member.

The bracket 200 of the present invention includes a predetermined number of holes for fixing 26 in the periphery of a base plate 20. The holes for fixing 26 allow the bracket 200 of the present invention to be mounted on a member on which a cone-shaped or a flat panel shaped loudspeaker system is to be mounted by using rivets, screws or other means without providing an adhesion means to the base plate 20. The structure of other components of the bracket 200 of the present invention is the same as that shown in Fig. 1.

Fig.4 is a perspective view of a bracket illustrating another example of the bracket of the present invention, when mounting a transducer speaker on a predetermined member.

The bracket 200' of the present invention includes a predetermined number of holes for fixing 26 in the periphery of base plate 20'. The holes for fixing 26 allow the bracket 200' of the present invention to be mounted on a member on which a transducer speaker is to be mounted by using rivets, screws or other means without providing an adhesion means to the base plate 20'. The structure of other components of the bracket 200' of the present invention is the same as that shown in Fig. 2.

The base plates 10, 10', 20 and 20' of the brackets 100, 100', 200 and 200' of the present invention shown in Figs. 1 to 4 are formed as separate members from the hooks 12, but the present invention is not limited to this configuration. That is to say, in the bracket of the present invention, the base plate and the hook can be formed into one member.

The bracket of the present invention can be formed of a synthetic resin, a metal, a wood or a composite of these materials, although it is not limited thereto. Examples of synthetic resins include thermoplastic resins such as polypropylene, polyethylene, polystyrene, ABS, polyethylene terephthalate, and polyvinyl chloride; and thermosetting resins such as phenol resins. Examples of metals include stainless steel, aluminum and copper. Examples of woods include laminated woods. The bracket of the present invention can be produced by injection molding, vacuum molding, pressure forming, casting or cutting the above-described materials, using means known to those skilled in the art.

Next, the mounting of a speaker on a door trim of a car by using the bracket of the present invention will be described.

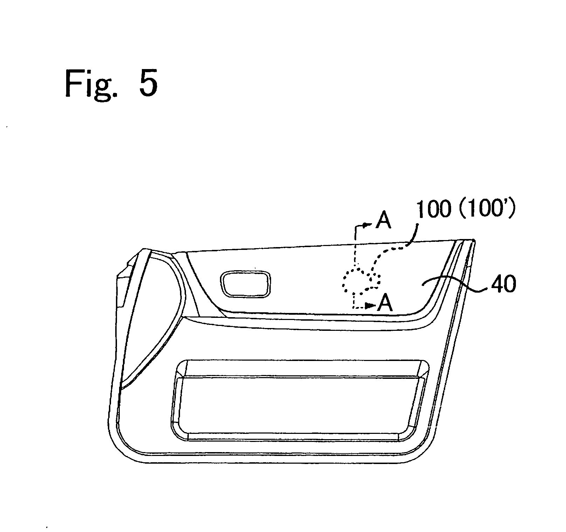

Fig. 5 is a schematic view (viewed from the inside of a car) of a front door of a car in which a speaker is fixed by using the bracket of the present invention. For example, the bracket 100 or 100' of the present invention is provided in a position shown by the broken line in Fig. 5 of the door trim 40 from the interior space of the front door. There is no particular limitation regarding the mounting position of the bracket 100 or 100' in the door trim 40, and the bracket 100 or 100' can be provided in a position that can improve the acoustic characteristics of the speaker in car audio equipment most effectively as known to those skilled in the art.

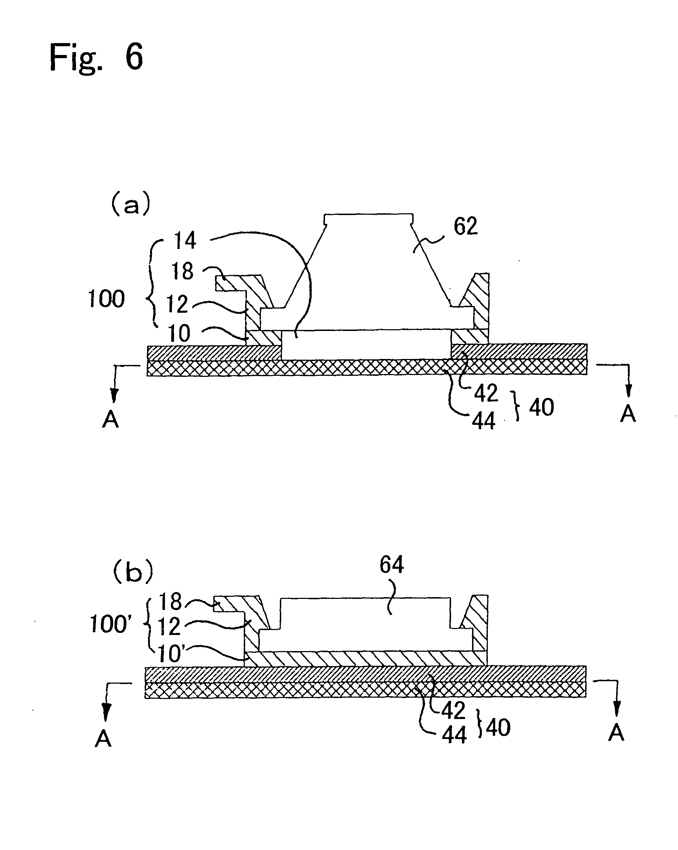

Figs. 6 (a) and 6 (b) are schematic cross-sectional views taken along line A-A of Fig. 5 illustrating the bracket of the present invention that is provided in a door trim of a car and on which a speaker is mounted. Fig. 6 (a) shows the case where a cone-shaped speaker is mounted, and Fig. 6 (b) shows the case where a transducer speaker is mounted.

As shown in Fig. 6 (a), a cone-shaped speaker 62 is fixed by sandwiching the edge of the speaker frame between the hook 12 and the base plate 10 provided in the bracket 100 of the present invention. Herein, in Fig. 6 (a), the lower portion of the drawing corresponds to the interior side of the car, and the upper portion of the drawing corresponds to the space between the door plate (not shown) of the outer side of the car and the door trim 40.

The base plate 10 is attached to the door trim member 42 (formed of a comparatively hard material such as polypropylene or kenaf) by using, for example, an adhesive. The opening 14 of the base plate 10 is provided so as to have a size that does not block the cone portion of the speaker 62 so that the acoustic characteristics of the cone-shaped speaker 62 are not adversely affected.

The outer surface of the door trim member 42 may be covered with a covering member 44 formed in a thickness and of a material (e.g., synthetic resins such as polypropylene, fabrics, or leather) that hardly adversely affect the acoustic characteristics of the speaker. When the cone-shaped speaker is fixed, the covering member 44 may be a mesh or provided with multiple holes or slits in a position corresponding to the opening 14 of the bracket 100. In Fig. 6 (a), the door trim 40 is made of a laminate including the door trim member 42 and the covering member 44, but it is not limited to this configuration. In other words, the door trim 40 is not necessarily provided with the covering member, or another member made of a material that does not adversely affect the acoustic characteristics of the cone-shaped speaker can be laminated.

As shown in Fig. 6 (b), when a transducer speaker 64 is provided, the speaker is fixed by sandwiching the edge of the speaker frame between the hook 12 and the base plate 10' provided in the bracket 100' of the present invention. In Fig. 6 (b), the lower portion of the drawing corresponds to the interior side of the car, and the upper portion of the drawing corresponds to the space between the door plate (not shown) of the outer side of the car and the door trim 40. The base plate 10' is attached to the door trim member 42 by using, for example, an adhesive, as in the above example.

On the other hand, the outer surface of the door trim member 42 may be covered with a covering member 44, as in the case shown in Fig. 6 (a). In Fig. 6 (b), the door trim 40 is formed of a laminate including the door trim member 42 and the covering member 44, but it is not limited to this configuration. In other words, the door trim 40 is not necessarily provided with the covering member, or another member made of a material that does not adversely affect the acoustic characteristics of the transducer speaker can be laminated.

Thus, the speaker is easily fixed on the predetermined member by using the bracket of the present invention. The present invention has been described by taking the car door trim as an example of the member on which the speaker is mounted, but the present invention is not limited thereto, and can be used in any places in which the speaker is desired to be provided, such as the instrumental panel, the rear tray, the pillar, a seat cushion, a back rest of a seat and the roof of a car; the screen of a movie theatre or a gallery; a partition set up in a meeting room or the like; a ceiling or a wall of an underground shopping center and the like.

The speaker mounted on the mounting member can be removed in the following manner, for example.

Referring to Fig.6 (a) again, first, the release flip 18 of the bracket 100 is pressed so that the projection of the hook 12 which has the release flip 18 is released from the edge of the speaker frame. At this time, it is kept fixing between the bracket and the mounting member. Thereafter, the cone-shaped speaker 62 is slid from the bracket. As a result, the cone-shaped speaker 62 can be very easily removed from the bracket without being damaged. Moreover, the transducer speaker shown in Fig.6 (b) can be also very easily removed from the bracket without being damaged in the same manner as the case of the above cone-shaped speaker.

The invention may be embodied in other forms without departing from the spirit or essential characteristics thereof. The embodiments disclosed in this application are to be considered in all respects as illustrative and not limiting. The scope of the invention is indicated by the appended claims rather than by the foregoing description, and all changes which come within the meaning and range of equivalency of the claims are intended to be embraced therein.

The present invention provides a bracket for mounting a speaker that allows a speaker to be easily mounted and removed without impairing the acoustic characteristics of the speaker used for a specific use such as car audio equipment, and that can reduce the possibility of the speaker being damaged during mounting or removal. The bracket of the present invention includes a base plate; and a plurality of hooks that are provided on one face of the base plate and can engage with a part of an edge of a speaker frame.

## Claims

1. A bracket for mounting a speaker comprising:
a base plate; and
a plurality of hooks that are provided on one face of the base plate and can engage with a part of an edge of a speaker frame from a front of the speaker.

2. The bracket according to claim 1, wherein at least one of the hooks comprises a release flip at its top.

3. The bracket according to claim 1 or 2, wherein the plurality of hooks are provided on the base plate at equal intervals.

4. The bracket according to any one of claims 1 to 3, wherein the base plate further comprises a hole for fixing.

5. The bracket according to any one of claims 1 to 4, wherein the speaker is selected from the group consisting of a cone-shaped speaker, a flat panel shaped loudspeaker system and a transducer speaker.

6. The bracket according to claim 5, wherein the cone-shaped speaker is selected from the group consisting of a curved cone-shaped speaker, a flat cone-shaped speaker, a double cone-shaped speaker, an opry cone-shaped speaker and a parabolic cone-shaped speaker.

7. The bracket according to claim 5, wherein the flat panel shaped loudspeaker system is selected from the group consisting of a Brat Harrah shaped speaker, a Gamuzon shaped speaker and a single Gamuzon shaped speaker.

8. A method for mounting a speaker on a mounting member comprising:
fixing a bracket, which has a base plate and a plurality of hooks, on the mounting member so that the base plate can contact with the mounting member; and
sandwiching a part of an edge of a speaker frame between the plurality of hooks and the base plate.

9. The method according to claim 8, wherein at least one of the hooks comprises a release flip at its top.

10. The method according to any one of claim 8 or 9, wherein the plurality of hooks are provided on the base plate at equal intervals.

11. The method according to any one of claims 8 to 10, wherein the base plate further comprises a hole for fixing.

12. The method according to any one of claims 8 to 11, wherein the speaker is selected from the group consisting of a cone-shaped speaker, a flat panel shaped loudspeaker system and a transducer speaker.

13. The method according to claim 12, wherein the cone-shaped speaker is selected from the group consisting of a curved cone-shaped speaker, a flat cone-shaped speaker, a double cone-shaped speaker, an opry cone-shaped speaker and a parabolic cone-shaped speaker.

14. The method according to claim 12, wherein the flat panel shaped loudspeaker system is selected from the group consisting of a Brat Harrah shaped speaker, a Gamuzon shaped speaker and a single Gamuzon shaped speaker.
